# EUROPEAN PATENT APPLICATION

(11) **EP 1 980 508 A1**
(43) Date of publication of application: **15.10.2008**
(21) Application number: 08154418.1
(22) Date of filing: 11.04.2008
(51) Int. Cl.: B65G 47/51

(54) **Vertical buffer store for a conveyor**

(30) Priority: 11.04.2007 SE 0700898
(71) Applicant: Mats Boman Aktiebolag, 667 22 Forshaga (SE)
(72) Inventor: Boman, Mats, 655 93 Karlstad (SE)
(74) Representative: Johansson, Lars-Erik

(57) **Abstract**

A vertical buffer store (10) for a conveyor (1) that has a plurality of spaced apart driven conveyor members (2) for the conveying of elongated goods (3) in a conveying plane (4), which buffer store (10) comprises a lift device (11) having at least two lifting organs (12) arranged between the conveyor members (2). In order to design the buffer store such that it does not require any space at a lower floor level and such that if needed it is easy to build into an existing conveyor at low cost, each of the lifting organs (12) comprises a plurality of carriers (14) that are transversal in relation to the conveying direction and are situated above each other, which carriers are arranged such that a carrier (14) in one lifting organ (12) is situated at the same level as a carrier (14) in the other lifting organ (12) and that they together form a horizontal lifting plane (15).

## Description

### TECHNICAL FIELD

The present invention relates to a vertical buffer store for a conveyor that has a plurality of spaced apart driven conveyor members for the conveying of elongated goods in a conveying plane, which buffer store comprises a lift device having at least two lifting organs arranged between the conveyor members.

In the present context, the term elongated goods also encompasses shorter products that are transported in sets of several products on some type of elongated conveyor tray.

### PRIOR ART

Often, there is a need in industry to buffer produced or treated products in connection with the conveying on a conveyor between two processing stations, in order thereby to increase efficiency by compensating the operating time required at the different stations, such that one operation does not need to wait for the other operation. In case of comparably short products, there is often made use of an extra loop in the horizontal plane, connected to the conveyor. If the products are elongated at all, such a design is impossible and hence it has been suggested to make the buffer store vertically moveable.

Hence, US 5,176, 242 reveals a conveying plant having a plurality of belt conveyors in series for items to be packaged. The plant comprises at least one buffer store that is arranged in a gap between two of the conveyors. Each buffer store comprises a vertically displaceable magazine which incorporates shelves arranged vertically one above the other at constant spacing. These are formed by a series of fingers that extend in the conveying direction of the plant and that fit between conveyor belts running next to each other and forming the conveyor belts of the two belt conveyors. The shelves are carried by a common vertical lifting bar positioned at the side of the conveyors. The lifting bar is held by a carriage that by aid of a motor driven toothed belt is moveable along a vertical guiding means that is supported by a frame that extends from the conveyors and down to the floor in a room at a floor level below the floor level of the conveyors. When the buffer store is empty, it is situated below the conveyors and essentially at the lower floor level. As the magazine is gradually filled it is lifted up such that empty shelves are accessible for additional buffer storing. It is a major disadvantage that buffer stores of this type require space at a lower floor level, especially in case it is desired to rebuild an existing conveyor by providing it with a buffer store.

### BRIEF ACCOUNT OF THE INVENTION

It is an object of the present invention to achieve a buffer store for elongated goods, which does not require space at a lower floor level and which is easy to build into an existing conveyor at low cost, when needed.

According to the invention, this objective is achieved in connection with the buffer store as cited in the introduction by each of the lifting organs comprising a plurality of carriers that are transversal in relation to the conveying direction and are situated above each other, which carriers are arranged such that a carrier in one lifting organ is situated at the same level as a carrier in the other lifting organ and that they together form a horizontal lifting plane.

In order to easily and at low cost enable for the buffer store to be built into an existing conveyor and not to require space at a lower floor, each lifting organ further comprises two spacer members arranged on either side of the conveyor, between which the carriers extend to form a ladder-like structure. The spacer members are provided with at least one hinge for each carrier such that the lifting organs can be folded together when being lowered and accumulated in a space formed between the conveying plane and an underlying floor at the floor level.

In order to facilitate simultaneous manoeuvring of the lifting organs, it is suitable that each of the lifting organs has an upper end attached to a vertically moveable, horizontally oriented lifting frame.

The lifting frame is advantageously suspended in a lifting stand that also supports the lifting frame in a direction lateral to the conveying direction. Thereby, the load is prevented from swinging sideways. There is essentially no risk of longitudinal swinging, i.e. in the conveying direction, since the goods is lifted up from the conveyor and lowered onto the conveyor while the conveyor is at standstill.

The lifting frame is preferably carried by two chains at both ends that via one corner block each, arranged at the lifting stand, extend around a part of the circumference of a respective chain wheel driven by a common drive motor and in engagement with the chain links, in order to raise and lower the lifting frame, and the two drive motors are suitably controlled such that the horizontal orientation of the lifting frame is maintained in connection with the raising/lowering of the lifting frame. Hereby, it will be much easier to raise and lower each lifting frame corner equally much in connection with the raising and lowering of the lifting frame.

The spacer members provided with hinges are beneficially formed by conveyor chains. As is realised by the person skilled in the art, spacer members provided with hinges can be designed in many different forms. By conveyor chains being standard components available in different embodiments and dimensions, using them will give the advantage of obtaining foldable spacer members at low cost.

Each conveyor chain preferably comprises links that are joined by swivel joints, and the ends of the carriers in the ladder-like structure are attached, e.g. by screws, that anchors the carriers in the swivel joints. This will give a reliable, foldable structure at low cost.

### BRIEF DESCRIPTION OF THE ENCLOSED DRAWINGS

In the following, the invention will be described in greater detail with reference to the preferred embodiments and the enclosed drawings.
- Fig. 1: is a view in perspective over a part of a conveyor with a preferred embodiment of a buffer store according to the present invention.
- Fig. 2: is a side view over the conveyor and the buffer store in Fig. 1 that is being filled up.
- Fig. 3: is a side view over the conveyor and the buffer store in Fig. 1 that is being emptied, and shows among other things how the lifting organs are folded together in the space between the conveying plane and the floor.
- Fig. 4: is an end view over the conveyor and the buffer store in Fig. 1.
- Fig. 5: is partial magnification of a portion of Fig. 4, and shows a chain that runs over a corner block.
- Fig. 6: is a cross-sectional view over a hinge in a conveyor chain, where the links are held together by a swivel joint, through which an end of a bar-shaped carrier extends and is fixed at the conveyor chain by a screw.

- Fig. 7: is a side view over the conveyor chain shown in Fig. 6.

### DETAILED DESCRIPTION OF PREFERRED EMBODIMENTS

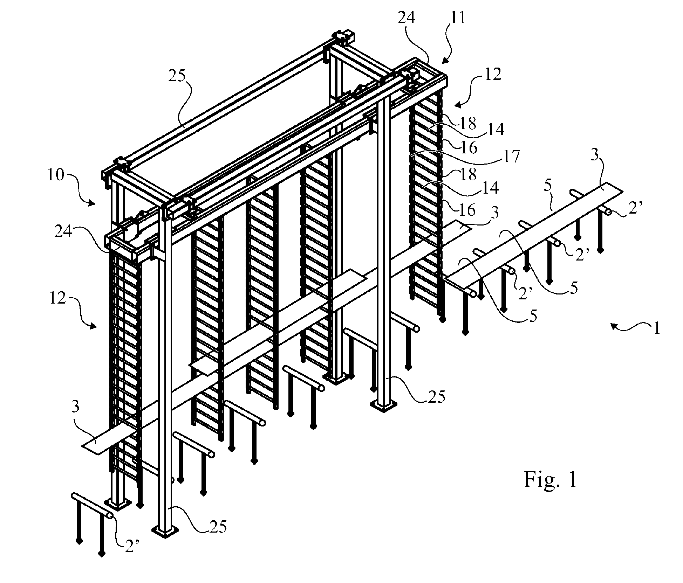

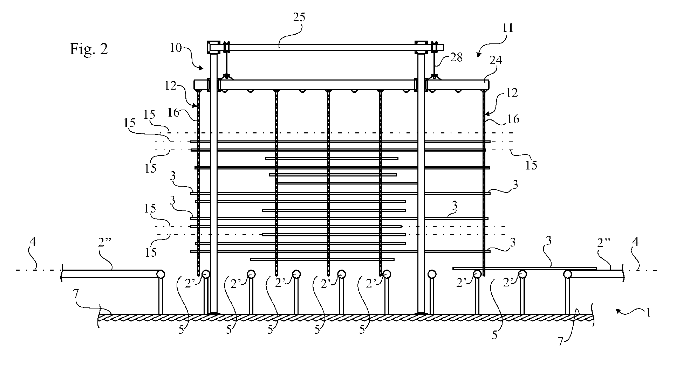

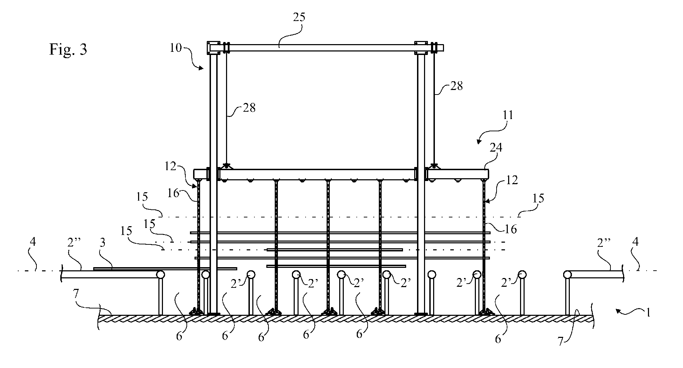

The perspective view of Fig. 1 shows a section of a conveyor 1 with a plurality of spaced apart driven conveyor members 2 for the conveying of elongated goods 3 in a conveying plane 4, from a first not shown to a second not shown station at a floor level. The floor of the floor level is not shown here. In Fig. 1, the conveyor members 2 are shown as driven rollers 2' in a roller way, but they may just as well be constituted by belt conveyors or, as is shown in Figs. 2 and 3, by a blend of rollers 2' and belt conveyors 2". The first station can be a production or processing station, such as for inspection, and the second station can be a processing station for processing, such as cutting, of the produced goods. In the shown preferred embodiment, the goods are thick elongated sheets 3 that are inspected in the first station before they are cut in the second station, but naturally the invention can be applied also for other elongated products such as sectional bars of steel or light metal, and also for shorter products in that case suitably conveyed on the conveyor 2 in sets of several products positioned on a suitable conveyor tray. Usually, everything runs at a even rate but sometimes the inspection is faster and then the sheets have to wait for their turn to be cut. On the other hand, there will be a time gap when one bundle of sheets has been inspected and a new bundle is to be delivered. In order to level out the differences between the operating times at the two stations, such that one operation does not need to wait for the other, the conveyor 1 is provided with a vertical buffer store 10. The buffer store 10 comprises a lifting device 11 with at least two lifting organs 12 arranged in consecutive gaps 5 between the conveyor members 2. Normally, there is not more than one lifting organ 12 in a single gap 5, but if desired it is possible to have two lifting organs in the gap. When the conveyor members 2 are constituted by driven rollers 2', the gap between them is usually of the magnitude 0.5 m.

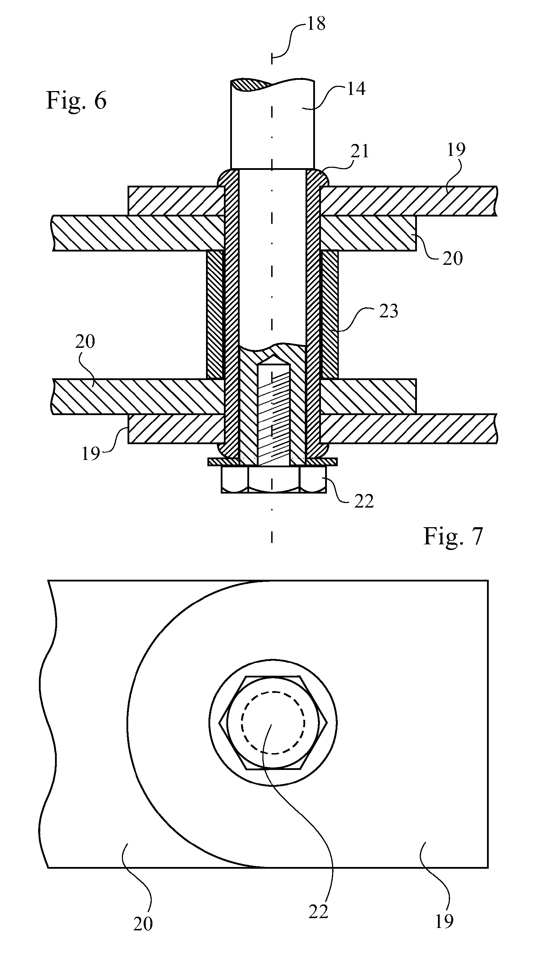

According to the invention, each of the lifting organs 12 comprises a plurality of carriers 14 that are transversal in relation to the conveying direction and are situated above each other, which carriers are arranged such that a carrier 14 in one lifting organ 12 is situated at the same level as a carrier 14 in the other lifting organ 12 and that they together form a horizontal lifting plane 15. Each lifting organ 12 furthermore comprises two spacer members 16, 17 arranged on either side of the conveyor, between which the carriers 14 extend to form a ladder-like structure. The spacer members 16, 17 in this ladder-like structure are provided with at least one hinge 18 for each carrier 14, such that, as is shown in Fig. 3, the lifting organs 12 can be folded together when being lowered and accumulated in a space 6 formed between the conveying plane 4 and an underlying floor 7 at the same floor level. A preferred embodiment of the hinges 18 is shown and described in detail below, in connection with Figs. 6 and 7. By this embodiment, the buffer store 10 does not require any space at a lower floor level and if needed it is easy to build into an existing conveyor 1 at low cost. As is best seen in Figs. 2 and 3, the lifting organs 12 have such a small extension in the conveying direction that they are easy to arrange in the gap 5 that exists between two consecutive conveyor members 2. Hereby, and particularly since the buffer store 10 need not extend down through the floor 7 and into a lower floor level, the installation costs will be low, particularly when building into an existing conveyor 1. Thanks to the folding together and accumulation in the space 6 of the lifting organs 12, when being lowered, between the conveying plane 4 and the floor 7, it is easy to provide the buffer store 10 with much more "shelves" 15 than would otherwise be possible.

In other words, the buffer store 10 according to the invention makes use of a "set of store shelves", that comprises at least two lifting organs 12, with a shape similar to ladders. These ladders are positioned in gaps 5 between the conveying members 2 and by raising and lowering the ladders, goods 3 can be lifted from and lowered onto the conveyor 1. In the buffer store 10, the goods will rest at its ends on a bar-shaped carrier 14 that can be resembled by the rung step of the ladder. It is also clear from Figs. 2 and 3 that the "shelves" 15 in the set of store shelves are formed by at least two carriers 14 arranged at the same level in a respective ladder and that the goods 3 that is stored can be of varying lengths. Greater variations in the length of the goods can be allowed when a plurality of ladder-shaped lifting organs are used but it is realised that two ladder-shaped lifting organs are adequate to lift elongated products of varying lengths even if they are positioned relatively close to each other.

The side views in Figs. 2 and 3 show an embodiment of a conveyor 1 provided with a buffer store 10 according to the invention. The conveyor 1 comprises spaced apart conveyor members in the form of belt conveyors 2" that in connection with the buffer store 10 have been replaced by driven rollers 2' that together define a conveying plane 4. The ladder-shaped lifting organs 12 are arranged in the gaps 5 between some of the rollers 2', and Figs. 2 and 3 show some of all the shelves 15 that are formed by at least two rung steps in the form of carriers 14 in a respective ladder, which rung steps are arranged at the same level.

In order to facilitate simultaneous manoeuvring of the lifting organs 12, it is suitable that each of the lifting organs has an upper end attached to a vertically moveable, horizontally oriented lifting frame 24. Suitably, the lifting frame 24 comprises a plurality of fasteners for the lifting organs 12, e.g. in the form of loops that may be evenly distributed along the lifting frame 24. Hereby, the lifting organs 12 can be moved and more or fewer lifting organs 12 can be used as necessary. The lifting frame 24 can be lifted from the floor by a hydraulic cylinder but advantageously it is suspended in a lifting stand 25 that also supports the lifting frame 24 laterally, i.e. in a direction lateral to the conveying direction. Thereby, the load 3 is prevented from swinging sideways. There is essentially no risk of longitudinal swinging, i.e. in the conveying direction, since the goods 3 is lifted up from the conveyor 1 and lowered onto the conveyor 1 while the conveyor is at standstill. Sliding supports 26 are preferably arranged between the lifting frame 24 and the stand 25.

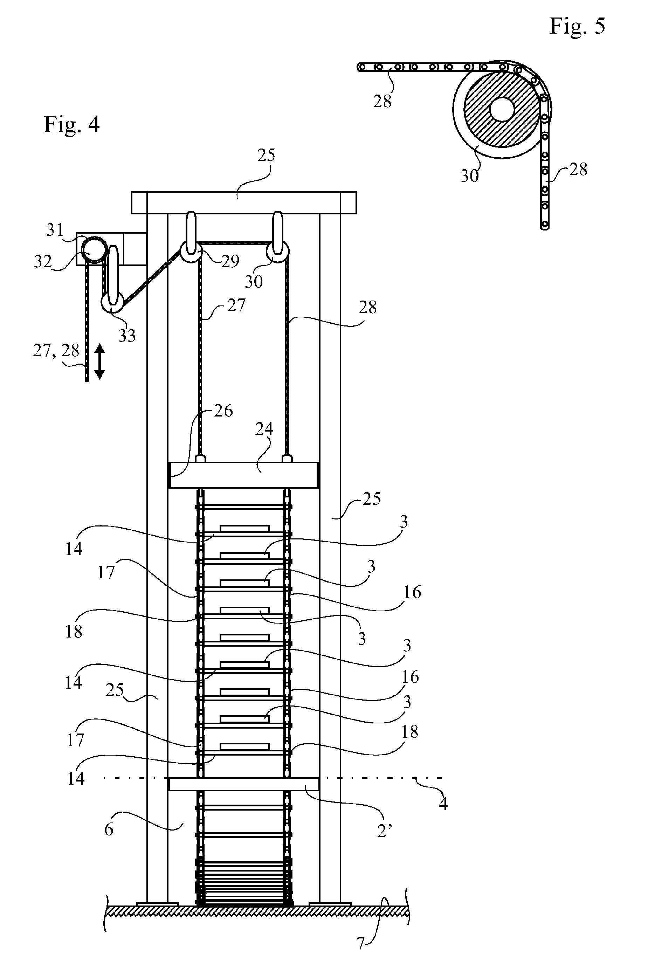

As is best shown in Figs. 4 and 5, the lifting frame 24 is preferably carried at both ends by two chains 27, 28 that via corner blocks 29 and 30, respectively, arranged at the lifting stand 25 extend around a part of the circumference of a respective chain wheel 32 driven by a common drive motor 31 and in engagement with the chain links, in order to raise and lower the lifting frame 24. For increased safety, it is suitable that the chains run in S-shape under a lower non-driven chain wheel 33 and over the driven chain wheel 32. The length of the chains 27, 28 is such that even when the lifting frame 24 is lowered to its lowest position, the chains have a free end portion that hangs down from the driven chain wheels 32. The chain 28 and its corner block 30 is shown in magnification in Fig. 5. The two drive motors 31, one for each end of the lifting frame 24, are suitably controlled such that the horizontal orientation of the lifting frame 24 is maintained when the lifting frame 24 is raised/lowered. Hereby, it will be much easier to raise and lower each lifting frame corner equally much in connection with the raising and lowering of the lifting frame 24. The drive motors 31 will raise the same number of chain steps and in synchronization, such that the framer 24 is horizontally raised, or else the motors 31 will be subjected to emergency shutdown. Advantageously, (inductive) sensors are arranged to detect this. The motor output is measured such that the motors are not overloaded.

The spacer members 16, 17 provided with hinges 18 are beneficially formed by conveyor chains. The person skilled in the art will however realise that if desired, the spacer members 16, 17 provided with a series of hinges 18 can have a number of alternative designs. By conveyor chains being standard components available in different embodiments and dimensions, using them will give the advantage of obtaining foldable spacer members at low cost. As is best shown in Figs. 6 and 7, each conveyor chain 16, 17 comprises external links 19 and internal links 20 that are joined by swivel joints 21, and at their ends the lateral carriers 14 in the ladder-like structure are attached by screws 22 that extend through the swivel joints 21. The swivel joints 21 are surrounded by spacer sleeves 23 that keep the links on one side of the chain 16, 17 at a desired distance from the ones on the other side. This will give a reliable, foldable structure at low cost. Fig. 6 shows that the ends of the carriers 14 preferably have a reduced diameter that is adapted to the inner diameter of the swivel joint 21, such that the end of the carrier 14 projects into or suitably extends through the swivel joint 21, such that the screw 22 is exposed only to a tensile stress. When the end of the carrier 14 extends all the way through the swivel joint 21, the screw for securing the attachment of the carrier 14 in the chain 18 can be replaced by some other suitable fastener (not shown), such as a clamp ring.

If desired, it is naturally possible in a not shown embodiment to use links that are not planar but instead are bent in such a way that the link at one end is mounted as an external link and at its other end is mounted as an internal link. If desired, it is also possible in a not shown embodiment to use a special chain in which the swivel joints have been replaced by the carriers 14, such that the carriers 14 connect the external and internal links 19, 20 on one side with the external and internal links 19, 20 on the other side of the chain. In that case, it is hence the chain that forms the ladder structure and external and internal links 19, 20 on one side of the chain form one spacer member 16, 17 while external and internal links 19, 20 on the other side form the other spacer member 16, 17.

In any case, the carriers 14 are suitably formed by round steel bars of the length required by the width of the conveyor 1 and a diameter in the magnitude of 25 mm when the goods 3 to be buffered is composed of a relatively thick plate. In standardized conveyor chains of a dimension suitable to be used in the buffer store according to the invention, the swivel joints 21 have an internal diameter of 20.3 or 14.3 mm.

In a not shown embodiment, the spacer members 16, 17 may alternatively be formed from steel wires, whereby the ladder structure will resemble a rope ladder. The use of conveyor chains instead of wires will however give the advantage that it will be easier to fasten the carriers 14 and that the fastening distance between the carriers 14 need not be measured to be constant. It is also possible to use chains which are made of torus-formed links and foldable in two dimensions instead of conveyor chains, but also in that case the fastening of the carriers 14 will be more complicated and will lock two links, which is a drawback to the articulation of the spacer members 16, 17. If desired, it is also possible to replace the lifting chains 27, 28 by e.g. steel cables in case the buffer store is to be used for lighter goods. Thin chains will however be preferred over steel cables since it will be easier to arrange the controlling of the drive motors 31 such that all corners of the lifting frame are raised/lowered at the same time if chains are used.

The easiest way of interlocking the system is such that the ladder-shaped lifting organs 12 will lift each incoming piece of goods 3, such as a bar or a sheet 3, independently of whether it could have moved all the way to the subsequent station, e.g. for cutting. The conveyor 1 is divided in sections with limit positions and the driving takes place dependently of whether the cutter or a corresponding processing device calls for material, if the buffer store 10 is to raise or lower a bar or a sheet 3. The conveyor units 2 will be inactive when the raising or lowering takes place, which is controlled by sensing the operation of the motors that drive the rollers 2' and/or the belt conveyors 2". If desired, a not shown gate can be arranged upstream of the buffer store 10, which gate makes sure that no bar/sheet 3 that is too high/wide is let through. Such a gate can also laterally guide the bar/sheet 3.

It is realised that the buffer store according to the invention can be modified within the scope of the inventive concept. A plurality of elongated products can be stored abreast on each "shelf', requiring that the products can be laterally guided. It is also possible to store a plurality of shorter products in a row by conveying the first product as far ahead as possible in the buffer store and positioning the next product just behind it before lifting, requiring that the conveyor members can be individually driven or driven in sections within the sector of the buffer store.

## Claims

1. A vertical buffer store for storing elongated goods (10) in a conveyor (1) that has a plurality of spaced apart driven conveyor members (2) for the conveying of the elongated goods (3) in a conveying plane (4), which buffer store (10) comprises a lift device (11) having at least two lifting organs (12) arranged between the conveyor members (2), wherein each of the lifting organs (12) comprises a plurality of carriers (14) that are transversal in relation to the conveying direction and are situated above each other, which carriers are arranged such that a carrier (14) in one lifting organ (12) is situated at the same level as a carrier (14) in the other lifting organ (12) and that they together form a horizontal lifting plane (15), and wherein each lifting organ (12) furthermore comprises two spacer members (16, 17) arranged on either side of the conveyor (1), between which the carriers (14) extend to form a ladder-like structure, **characterised in that** the spacer members are provided with at least one hinge (18) for each carrier (14) such that the lifting organs (12) can be folded together when being lowered and accumulated in a space (6) formed between the conveying plane (4) and an underlying floor (7) at the floor level.

2. A vertical buffer store according to claim 1, **characterised in that** each of the lifting organs (12) has an upper end attached to a vertically moveable, horizontally oriented lifting frame (24).

3. A vertical buffer store according to claim 2, **characterised in that** the lifting frame (24) is suspended in a lifting stand (25) that also supports the lifting frame (24) in a direction lateral to the conveying direction.

4. A vertical buffer store according to claim 3, **characterised in that** the lifting frame (24) is preferably carried at both ends by two chains (27, 28) that via corner blocks (29, 30) arranged at the lifting stand (25) extend around a part of the circumference of a respective chain wheel (32) driven by a common drive motor (31) and in engagement with the chain links, in order to raise and lower the lifting frame (24).

5. A vertical buffer store according to claim 4, **characterised in that** the two drive motors (31) are controlled such that the horizontal orientation of the lifting frame (24) is maintained when the lifting frame (24) is raised/lowered.

6. A vertical buffer store according to any one of claims 1-5, **characterised in that** the spacer members provided with hinges (18) are formed by conveyor chains (16, 17).

7. A vertical buffer store according to claim 6, **characterised in that** each conveyor chain (16, 17) comprises links (19, 20) that are joined by swivel joints (21), and **in that** the ends of the carriers (14) in the ladder-like structure are attached by screws (22) that anchor the carriers (14) in the swivel joints (21).
